# EUROPEAN PATENT APPLICATION

(11) **EP 2 017 831 A2**
(43) Date of publication of application: **21.01.2009**
(21) Application number: 08150559.6
(22) Date of filing: 23.01.2008
(51) Int. Cl.: G10L 19/14

(54) **Method and apparatus for transmitting and processing audio**

(30) Priority: 20.07.2007 KR 20070073119
(71) Applicant: Samsung Electronics Co., Ltd., Suwon-si, Gyeonggi-do 442-742 (KR)
(72) Inventor: Kim, Seung-hoon, Seoul (KR)
(74) Representative: Clark, David James

(57) **Abstract**

Provided are a method and apparatus for transmitting and processing an Inter-IC Sound (I2S) format audio signal. The method of transmitting an audio signal in a normal serial audio format between a first logic unit and a second logic unit, the method includes: converting a first additional information signal with regard to the audio signal into a second additional information signal in the normal serial audio format (210); and transmitting the second additional information signal using a channel for transmitting the audio signal (220).

## Description

### BACKGROUND OF THE INVENTION

### 1. Field of the Invention

Methods and apparatuses consistent with the present invention relate to transmitting and processing an audio signal.

### 2. Description of the Related Art

People may listen to music using various types of audio devices. In particular, portable audio reproducing devices such as cellular phones having a music reproduction function, MP3 players, and the like are used to store and reproduce several tens or hundreds of music files.

A variety of types of digital audio interface formats are used to store music files. Representative types of digital audio interface formats include an Inter-IC Sound (I2S) format, a normal serial audio format, and a Sony/Philips Digital Interface Format (S/PDIF). In particular, the I2S format is widely used for analog to digital converters (ADCs) designed for small portable digital audio devices. The I2S format can change settings including resolution or a sampling period of various pulse code modulation (PCM) signals and transmit audio signals.

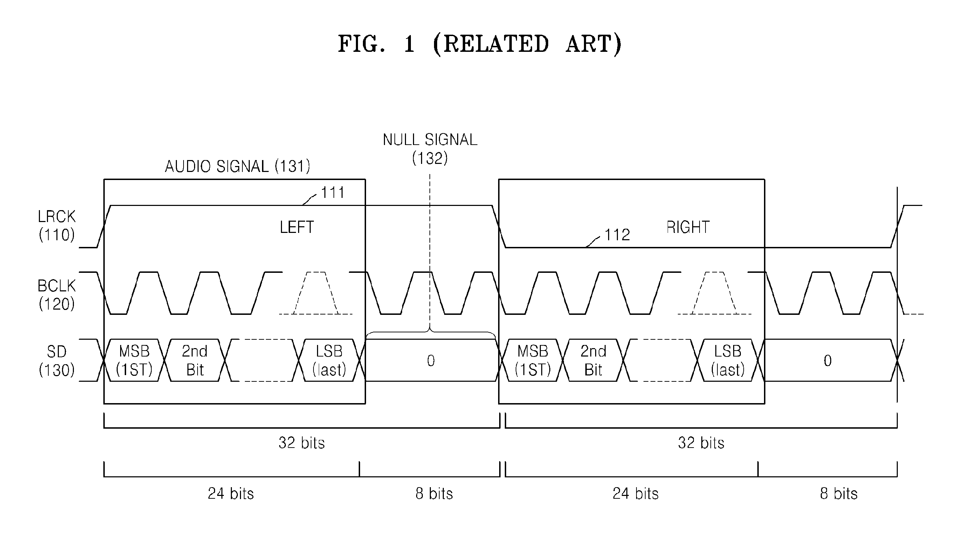

FIG. 1 illustrates related art transmission of an I2S format audio signal 131. Referring to FIG. 1, a left right clock signal (LRCK) 110, a bit clock signal (BCLK) 120, and serial data (SD) 130 need three transmission channels in order to transmit the I2S format audio signal 131.

The LRCK signal 110 is used to classify a left signal 111 and a right signal 112 when the audio signal 131 has two channels.

The BCLK signal 120 is used to transmit bits corresponding to the audio signal 131.

The SD 130, which is a signal including the audio signal 131, has a most significant bit (MSB) mode in which the MSB is first transmitted and a least significant bit (LSB) mode in which the LSB is first transmitted. Hereinafter, a description will be provided with regard to the MSB mode.

An integrated circuit (IC) receiving the audio signal 131 is not informed of how many bits the SD 130 is comprised of, and how many bits of the SD 130 are transmitted. If a word used in a system has a greater size than that of the audio signal 131, a NUL signal 132 is added to the end of the audio signal 131 in order to modify the size of the SD 130 in accordance with the size of the word.

It is advantageous that the IC receiving the audio signal 131 does not need information on the size of the SD 130, which is made possible by the addition of the NULL signal 132 to the end of the audio signal 131. However, the addition of an unnecessary NULL signal does not prevent wasteful transmission channel consumption.

Furthermore, ADCs or digital to analog converters (DACs) must be controlled in order for ICs such as ADCs or DACs to use I2S format audio signal. Since additional channels are needed to transmit control signals, ICs must use many pins to transmit I2S format audio signals.

### SUMMARY OF THE INVENTION

According to an aspect of the present invention, there is provided a method of transmitting an audio signal in a normal serial audio format between a first logic unit and a second logic unit, the method comprising: converting a first additional information signal with regard to the audio signal into a second additional information signal in the normal serial audio format; and transmitting the second additional information signal by using a channel for transmitting the audio signal.

The transmitting of the second additional information signal may comprise: transmitting the second additional information signal by using a section of the channel in which the audio signal is not transmitted.

The second additional information signal may comprise a signal for controlling the audio signal.

The second additional information signal may comprise a time information signal for synchronizing and reproducing the audio signal.

The normal serial audio format may comprise one of an I2S format, a Left justified format, and a Right justified format.

According to another aspect of the present invention, there is provided a method of processing an audio signal in a normal serial audio format comprising: receiving an additional information signal in the normal serial audio format with regard to the audio signal by using a channel for receiving the audio signal; and extracting additional information from the additional information signal in the normal serial audio format.

The additional information signal may be received by using a section of the channel in which the audio signal is not transmitted.

The additional information signal may comprise a signal for controlling the audio signal.

The additional information signal may comprise a time information signal for synchronizing and reproducing the audio signal.

The method may further comprise: controlling the audio signal using the additional information signal.
The method may further comprise: synchronizing and reproducing the audio signal using the additional information signal.

The normal serial audio format may comprise one of an I2S format, a Left justified format, and a Right justified format.

According to another aspect of the present invention, there is provided an apparatus for transmitting an audio signal in a normal serial audio format between a first logic unit and a second logic unit, the apparatus comprising: a converting unit converting a first additional information signal with regard to the audio signal into a second additional information signal in the normal serial audio format; and a transmitting unit transmitting the second additional information signal by using a channel for transmitting the audio signal.
According to another aspect of the present invention, there is provided an apparatus for processing an audio signal in a normal serial audio format comprising: a receiving unit receiving an additional information signal in the normal serial audio format with regard to the audio signal by using a channel for receiving the audio signal; and an extracting unit extracting additional information from the additional information signal in the normal serial audio format.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 illustrates related art transmission of an I2S format audio signal;
FIG. 2 is a flowchart of an audio signal transmission method according to an exemplary embodiment of the present invention;
FIG. 3 illustrates transmission of an I2S format audio signal according to an exemplary embodiment of the present invention;
FIG. 4 is a flowchart of an audio signal processing method according to an exemplary embodiment of the present invention;
FIG. 5 is a block diagram of an audio signal transmission apparatus according to an exemplary embodiment of the present invention;
FIG. 6 is a detailed block diagram of the construction of the audio signal transmission apparatus of FIG. 5 according to an exemplary embodiment of the present invention;
FIG. 7 illustrates an IC that transmits an audio signal, according to an exemplary embodiment of the present invention; and
FIG. 8 is a block diagram of an audio signal processing apparatus according to an exemplary embodiment of the present invention.

### DETAILED DESCRIPTION OF EXEMPLARY EMBODIMENTS OF THE INVENTION

Hereinafter, the present invention will be described in detail by explaining exemplary embodiments of the invention with reference to the attached drawings.

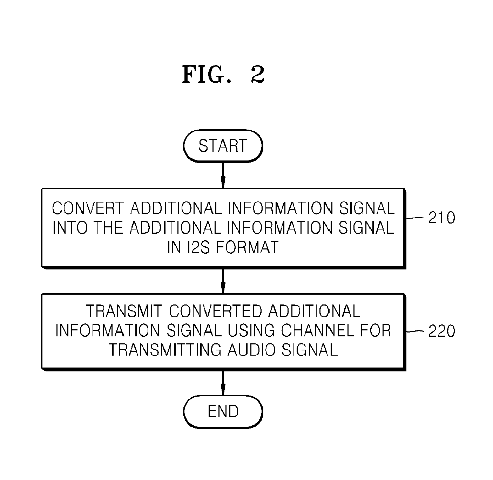

FIG. 2 is a flowchart of an audio signal transmission method according to an exemplary embodiment of the present invention. Referring to FIG. 2, in operation 210, an additional information signal of an audio signal is converted into an I2S format additional information signal. The audio signal and the additional information signal have the I2S format but they also may have one of various types of normal serial audio formats including Left and Right justified formats.

The additional information signal includes at least one of a control signal for controlling the audio signal and a time information signal for synchronizing the audio signal and carrying out play, stop, skip and standby functions with another signal (e.g., a video signal).

In operation 220, a channel for transmitting the audio signal is used to transmit the converted additional information signal. For example, the converted additional information signal can be transmitted through a section of the channel in which the audio signal is not transmitted.

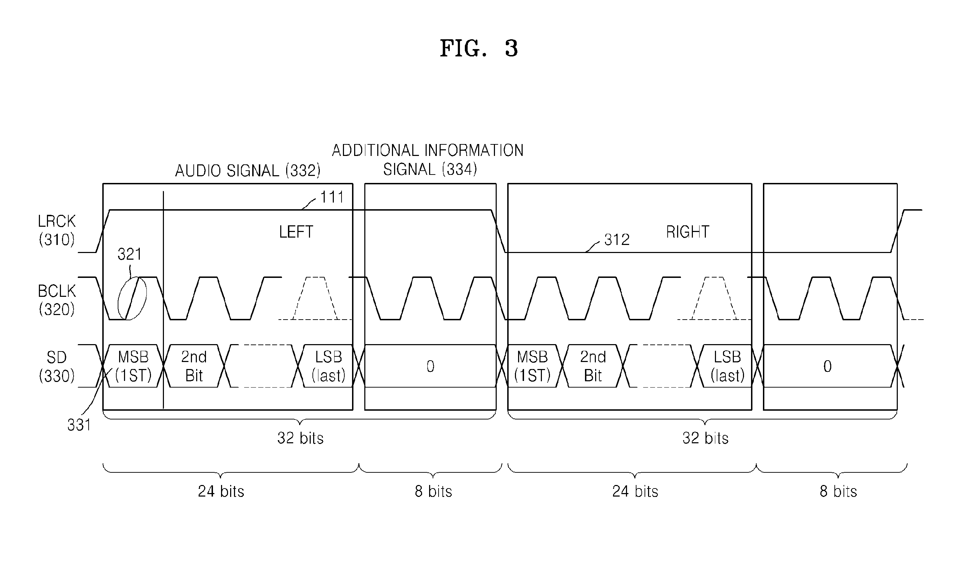

FIG. 3 illustrates transmission of an I2S format audio signal 332 according to an exemplary embodiment of the present invention. Referring to FIG. 3, a master clock signal (MCLK) (not shown), a left right clock signal (LRCK) 310, a bit clock signal (BCLK) 320, and serial data (SD) 330 need transmission channels in order to transmit the two-channel audio signal 332 in the I2S format. The MCLK is used to control a total system and its description will be omitted.

The LRCK signal 310 is used to classify a Left signal 311 and a Right signal 312 of the two-channel audio signal 332. In the present exemplary embodiment, a clock signal is high in the Left signal 311, and the clock signal is low in the Right signal 312. However, the clock signal can be low in the Left signal 311.

The BCLK signal 320 is used to transmit the two-channel audio signal 332. In the present exemplary embodiment, the BCLK signal 320 is 64 fs and has 64 clock pulses during a period of the LRCK signal 310. Thus, the Left signal 311 has 32 high clock pulses and 32 low clock pulses. The BCLK signal 320 is also sometimes referred to as a serial clock signal (SCLK).

The SD 330 is a data signal being transmitted. In the present exemplary embodiment, the SD 330 includes the audio signal 332 and an additional information signal 334.

The audio signal 332 is a digital signal obtained by sampling an analog audio signal and quantizing the sampled analog audio signal. In transmitting the audio signal 332, a most significant bit (MSB) mode in which the MSB is first transmitted and a least significant bit (LSB) mode in which the LSB is first transmitted. The number of bits necessary for the transmission of the audio signal 332 can vary according to a number of quantization levels of a sampled signal. In the present exemplary embodiment, the audio signal 332 has a 24-bit size.

The additional information signal 334 can be a control signal for controlling a digital to analog converter (DAC) or an analog to digital converter (ADC). The additional information signal 334 can be used to indicate that the audio signal 332 is a left or right justified signal, or control volume or polarity of the LRCK signal 310 or the BCLK signal 320.

If each bit of the SD 330 meets each clock pulse of the BCLK signal 320, a corresponding bit is transmitted. A variety of methods may be used to transmit each bit of the SD 330. For example, each bit of the SD 330 is sent to a shifter, and a pulse signal of the BCLK signal 320 is also transmitted to the shifter. An input of the pulse signal of the BCLK signal 320 corresponding to a rising edge leads to transmission of a single bit. According to another exemplary embodiment, an input of the pulse signal of the BCLK signal 320 corresponding to a falling edge leads to transmission of a single bit. In the present exemplary embodiment, the MSB 331 of the SD 330 is transmitted if it meets a rising edge 321 of the BCLK signal 320.

All bits corresponding to the audio signal 332 are transmitted using the above-described method. Since the BCLK signal 320 has 32 high clock pulses and 32 low clock pulses in the Left signal 311, 8 clock pulses remain after all bits corresponding to the audio signal 332 are transmitted. The number of high clock pulses of the BCLK signal 320 and the number of bits necessary for the transmission of the audio signal 332 may be different from each other in this way due to several reasons. For example, a word used in a system has a different size from the audio signal 332.

The remaining 8 clock pulses are used to transmit the additional information signal 334 using the same method of transmitting the audio signal 332.

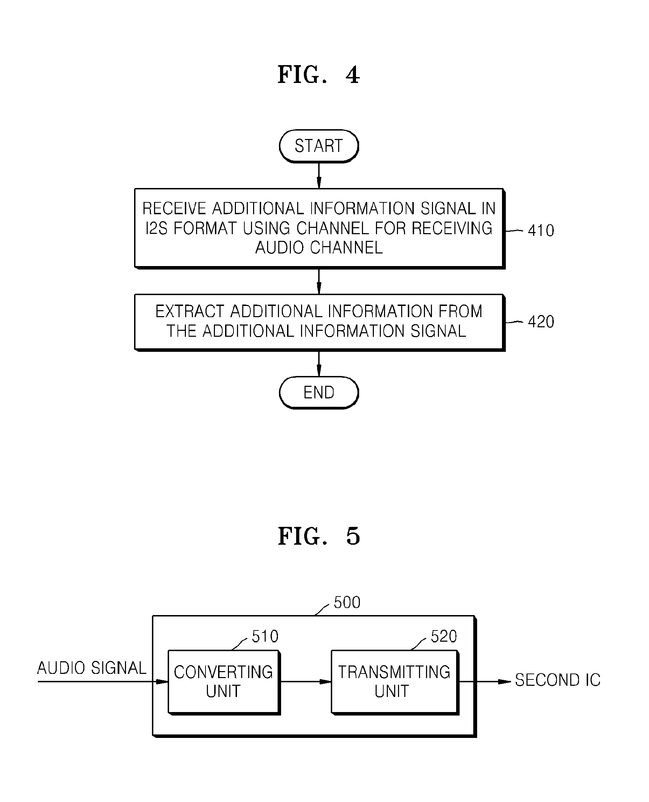

FIG. 4 is a flowchart of an audio signal processing method according to an exemplary embodiment of the present invention. Referring to FIG. 4, in Operation 410, an I2S format additional information signal with regard to an audio signal is received using a channel for receiving the audio channel. The additional information signal can be received through a section of the channel in which the audio signal is not transmitted.

In Operation 420, additional information is extracted from the I2S format additional information signal.

The additional information signal can be a control signal for controlling the audio signal.

The additional information signal can be a time information signal for synchronizing the audio signal with another signal (e.g., a video signal) and reproducing the synchronized audio signal. The additional information signal can be a synchronization time information signal for carrying out reproduction and stopping of each sampled audio signal, so that the additional information signal can synchronize the audio signal with another signal and carry out reproduction and stopping of the synchronized audio signal.

FIG. 5 is a block diagram of an audio signal transmission apparatus 500 according to an exemplary embodiment of the present invention. Referring to FIG. 5, the audio signal transmission apparatus 500 comprises a converting unit 510 and a transmitting unit 520.

The converting unit 510 converts an additional information signal with regard to an audio signal into an I2S format additional information signal. The additional information signal can be a signal for controlling the audio signal or a time information signal for synchronizing and reproducing the audio signal.

The transmitting signal 520 transmits the additional information signal using a channel for transmitting the audio signal. In this regard, the transmitting signal 520 can transmit the audio signal through a section of the channel in which the audio signal is not transmitted.

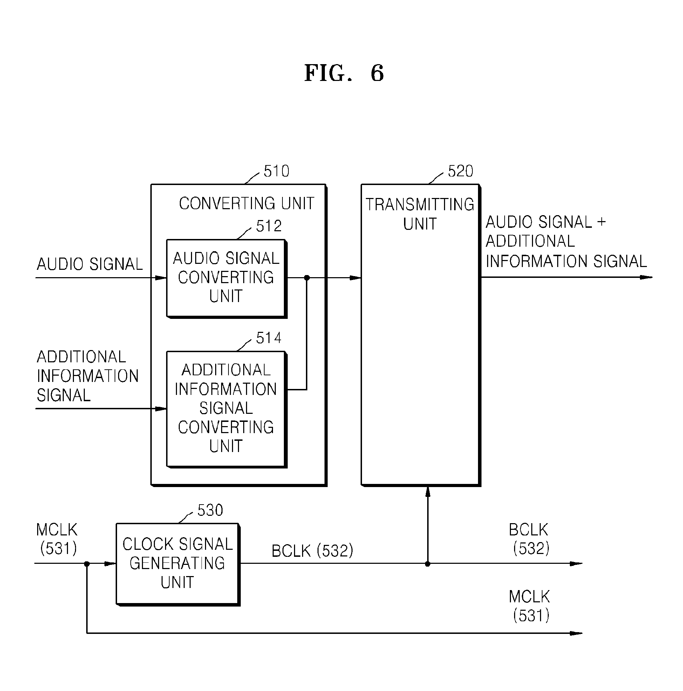

FIG. 6 is a detailed block diagram of the construction of the audio signal transmission apparatus 500 of FIG. 5 according to an exemplary embodiment of the present invention. Referring to FIG. 6, the audio signal transmission apparatus 500 comprises a converting unit 510, a transmitting unit 520, and a clock signal generating unit 530.

The converting unit 510 comprises an audio signal converting unit 512 that converts an audio signal into an I2S format audio signal and an additional information signal converting unit 514 that converts additional information on the audio signal into an I2S format additional information signal. The audio signal converting unit 512 and the additional information signal converting unit 514 can be included in the converting unit 510 or can be separated from each other.

The audio signal converting unit 512 converts the audio signal into the I2S format audio signal. Audio signals input into the audio signal converting unit 512 are data stored in a buffer (not shown). If the buffer is employed in the audio signal converting unit 512, control signals of address information, data information, interrupt information, and the like are sent to the buffer, so that a desired audio signal can be input into the audio signal converting unit 512.

The additional information signal converting unit 514 converts the additional information signal with regard to the audio signal into the I2S format additional information signal. Additional information signals input into the additional information signal converting unit 514 can be data stored in a buffer (not shown).

The transmitting unit 520 transmits the audio signal converted by the audio signal converting unit 512 and the additional information signal converted by the additional information signal converting unit 514 by using a single transmission channel. The transmitting unit 520 is embodied as a shift register but the present invention is not limited thereto. The transmitting unit 520 receives a clock signal from the clock signal generating unit 530.

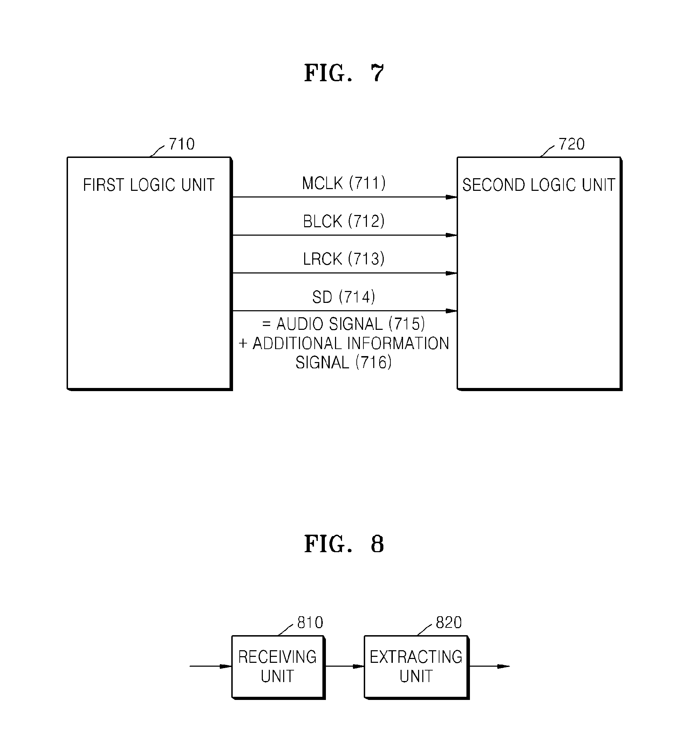

The clock signal generating unit 530 generates a BCLK signal 532 by using an MCLK signal 531. The BCLK signal 532 is sent to the transmitting unit 520 and controls it to transmit the audio signal and the I2S format additional information signal. FIG. 7 illustrates an IC that transmits an audio signal, according to an exemplary embodiment of the present invention. Referring to FIG. 7, the IC that transmits the audio signal comprises a first logic unit 710 and a second logic unit 720.

The first logic unit 710 transmits an MCLK signal 711, a BCLK signal 712, an LRCK signal 713, and SD 714 using each transmission channel in order to transmit an audio signal 715 and an additional information signal 716 in an I2S format.

The MCLK signal 711 is a master clock. The BCLK signal 712 transmits each bit of the SD 714 at each clock rising edge.

If a signal of the SD 714 is, for example, a two-channel audio signal, the LRCK signal 713 determines whether the signal of the SD 714 is a Right or Left signal.

The SD 714 comprises the audio signal 715 and the additional information signal 716. The additional information signal 716 can be a control signal for establishing a format of the audio signal 715, controlling a level, erasing sound, controlling sound volume, carrying out a dynamic range control (DRC), and carrying out audio/video (A/V) synchronization flow control (e.g., stop, reproduction, skip, standby, and the like) thereof. The additional information signal 716 can be a time information signal used to synchronize another signal such as a video signal and control A/V flow such as stop, reproduction, skip, standby, and the like.

Therefore, it is not necessary to transmit a signal for controlling an audio signal, and thus an additional transmission channel is not needed.

FIG. 8 is a block diagram of an audio signal processing apparatus according to an exemplary embodiment of the present invention. Referring to FIG. 8, the audio signal processing apparatus comprises a receiving unit 810 and an extracting unit 821.

The receiving unit 810 receives an I2S format additional information signal with regard to an audio signal using a channel for receiving the audio signal. The receiving unit 810 can receive the additional information signal at a section of the channel in which the audio signal is not transmitted.

The extracting unit 821 extracts additional information from the I2S format additional information signal.

The additional information signal can be a signal for controlling the audio signal. In this case, the audio signal processing apparatus further comprises a controller (not shown) that controls the audio signal using the additional information signal.

The additional information signal can be a time information signal that synchronizes and reproduces the audio signal. In this case, the audio signal processing apparatus further comprises a controller (not shown) that controls the audio signal to be synchronized with another signal (e.g., a video signal) and reproduced. The additional information signal can be a reproduction time information signal of each of sampled audio signals, so that each sampled audio signal can be synchronized with another signal and reproduced.

Embodiments of the present invention can be written as computer programs and can be implemented in general-use digital computers that execute the programs using a computer readable recording medium.

Also, the data structure used in the exemplary embodiments of the present invention described above can be recorded on a computer readable recording medium via various means.

Examples of the computer readable recording medium include magnetic storage media (e.g., ROM, floppy disks, hard disks, etc.), and optical recording media (e.g., CD-ROMs, or DVDs).

Example embodiments of the present invention provide a method and apparatus for transmitting and processing an audio signal by which a transmission channel necessary for an Inter-IC Sound (I2S) format audio signal is reduced and the audio signal is efficiently controlled.

As described above, according to example embodiments of the present invention, a channel for transmitting an audio signal is used to transmit an additional information signal, thereby reducing the need for an additional transmission channel.

In such embodiments an audio signal is controlled in a sampling unit, thereby allowing accurate and efficient control of an A/V flow.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of transmitting an audio signal in a normal serial audio format between a first logic unit and a second logic unit, the method comprising:
converting a first additional information signal with regard to the audio signal into a second additional information signal in the normal serial audio format (210); and
transmitting the second additional information signal using a channel for transmitting the audio signal (220).

2. The method of claim 1, wherein the transmitting the second additional information signal comprises transmitting the second additional information signal using a section of the channel in which the audio signal is not transmitted.

3. The method of claim 1 or 2, wherein the second additional information signal comprises a signal for controlling the audio signal.

4. The method of claim 1, 2 or 3, wherein the second additional information signal comprises a time information signal for synchronizing and reproducing the audio signal.

5. The method of any preceding claim, wherein the normal serial audio format comprises one of an Inter-IC Sound format, a Left justified format, and a Right justified format.

6. A method of processing an audio signal in a normal serial audio format, the method comprising:
receiving an additional information signal in the normal serial audio format with regard to the audio signal via a channel for receiving the audio signal (410); and
extracting additional information from the additional information signal in the normal serial audio format (420).

7. The method of claim 6, wherein the additional information signal is received in a section of the channel in which the audio signal is not transmitted.

8. The method of claim 6 or 7, wherein the additional information signal comprises a signal for controlling the audio signal.

9. The method of claim 6, 7 or 8, wherein the additional information signal comprises a time information signal for synchronizing and reproducing the audio signal.

10. The method of any one of claims 7-9, further comprising controlling the audio signal using the additional information signal.

11. The method of any one of claims 7-10, further comprising synchronizing and reproducing the audio signal using the additional information signal.

12. The method of any one of claims 7-11, wherein the normal serial audio format comprises one of an Inter-IC Sound format, a Left justified format, and a Right justified format.

13. An apparatus for transmitting an audio signal in a normal serial audio format between a first logic unit and a second logic unit, the apparatus comprising:
a converting unit (510) operable to convert a first additional information signal with regard to the audio signal into a second additional information signal in the normal serial audio format; and
a transmitting unit (520) operable to transmit the second additional information signal using a channel for transmitting the audio signal.

14. The apparatus of claim 13, wherein the transmitting unit (520) is operable to transmit the second additional information signal using a section of the channel in which the audio signal is not transmitted.

15. The apparatus of claim 13 or 14, wherein the second additional information signal comprises a signal for controlling the audio signal.

16. The apparatus of claim 13, 14 or 15, wherein the second additional information signal comprises a time information signal for synchronizing and reproducing the audio signal.

17. An apparatus for processing an audio signal in a normal serial audio format, the apparatus comprising:
a receiving unit (810) which is arranged to receive an additional information signal in the normal serial audio format with regard to the audio signal via a channel for receiving the audio signal; and
an extracting unit (820) which is arranged to extract additional information from the additional information signal in the normal serial audio format.

18. The apparatus of claim 17, wherein the additional information signal is received in a section of the channel in which the audio signal is not transmitted.

19. The apparatus of claim 17 or 18, wherein the additional information signal comprises a signal for controlling the audio signal.

20. The apparatus of claim 17, 18 or 19, wherein the additional information signal comprises a time information signal for synchronizing and reproducing the audio signal.

21. The apparatus of claim 17, 18, 19 or 20, further comprising a controller which is arranged to control the audio signal using the additional information signal.

22. The apparatus of any one of claims 17-21, further comprising a controller which is arranged to synchronize and reproduce the audio signal using the additional information signal.

23. A computer readable recording medium having recorded thereon a computer program for executing the method of any one of claims 1-12.
